Europäisches Patentamt

**European Patent Office**

Office européen des brevets

(19)

(11) Publication number: **0 189 621**

**A1**

(12) # EUROPEAN PATENT APPLICATION

(21) Application number: **85300581.7**

(22) Date of filing: **29.01.85**

(51) Int. Cl.⁴: **E 21 F 13/02**
**B 60 M 1/28, B 61 K 9/08**
**E 01 B 33/02, G 01 C 7/06**
**G 01 D 9/38, G 01 S 15/88**
**//E01B35/00, G01P15/00**

(43) Date of publication of application:
**06.08.86 Bulletin 86/32**

(84) Designated Contracting States:
**AT BE CH DE FR LI SE**

(71) Applicant: **W.H. Dunn & Son Ltd.**
**Smisby Road Ashby-de-la-Zouch**
**Leicestershire, LE6 5UR(GB)**

(72) Inventor: **Kirtland, Dennis Alfred**
**W.H. Dunn & Son Ltd. Smisby Road**
**Ashby-de-la-Zouch Leicestershire(GB)**

(74) Representative: **Drever, Ronald Fergus et al,**
**Swindell & Pearson 44, Friar Gate**
**Derby DE1 1DA(GB)**

(54) **Rail-borne apparatus for measuring and recording the parameters of the roadway track or of the carrier vehicle, the position of trolley wires and the roadway clearance, and for correcting the position of the track.**

(57) As well as monitoring line, cant and gauge of a roadway track, the apparatus is adapted to survey the position of a trolley wire by monitoring the displacements of a trolley pole structure biased into contact with the wire.

Chart recorders can be switched over to record the pulses derived from the non-driven running wheels of the carrier vehicle and proportional to the rate of movement along the track, which pulses normally control the drive of the recording chart, the chart now being moved at a constant speed. This provides for checking, e.g., stopping distances of the drive vehicles after braking.

For monitoring clearance in the roadway, there is provided, in a housing (24), a plurality of sonar pulse producing components arranged and adapted to reveal encroachments on the required free section.

For correcting the position of the track, the vehicle is provided with rail gripping clamps, lateral lifting rams (40) and horizontal slewing rams (52).

./...

FIG 3

## Apparatus for a Track Roadway

This invention is concerned with improvements in or relating to apparatus for use in association with a track roadway, and particularly apparatus for monitoring changes in at least one parameter of a track roadway and for correction of the position thereof.

According to one aspect of the present invention there is provided apparatus for use in association with a track roadway, said apparatus comprising a structure supported on a track wheel arrangement, clamp means provided on the structure for clamping of the latter to a rail or rails of the track, ground engaging means mounted on the structure to be movable between a first position clear of the roadway for movement of the apparatus along the track, and a second position in engagement with the roadway whereby the apparatus, and thus selectively the rail or rails, can be raised relative to the ground engaging means, and means for moving the apparatus, and thus selectively the rail or rails, laterally relative to the ground engaging means, whereby to correct the position of the track.

Preferably the ground engaging means comprises at least one ram positioned laterally outwardly of each side of the structure and disposed vertically.

Preferably also the lateral moving means includes a horizontally disposed ram extending outwardly from each side of the structure and being connected with the respective ground engaging means.

According to another aspect of the present invention there is provided apparatus for use in association with a track roadway, said apparatus comprising a structure supported on a track wheel arrangement, means operatively connected with the track wheel arrangement for generating a sequence of signals at a rate proportional to the rate of movement along a track, means mounted on the structure to extend upwardly therefrom and present a component for contact with a trolley wire in the track roadway, the component being movable about a plurality of axes relative to the structure, whereby the relative position of the component can vary in accordance with variations in height and lateral position of the trolley wire in the track roadway, and means for converting the relative movement of the component into information which is presented to receiving means therefor.

Preferably the component comprises an elongate arrangement which provides a follower for engagement with a trolley wire, and the component presenting means comprises a support which pivotally mounts the elongate arrangement, the support being pivotally mounted on the structure.

Preferably also, the elongate arrangement is pivotally mounted for movement in a vertical plane relative to the support, and the vertical displacement is monitored by means of a linear potentiometer extending between the elongate arrangement and the support.

Desirably, the support is pivotal relative to the structure in a horizontal plane in accordance with the angle of displacement of the elongate arrangement, the angle of displacement of the elongate arrangement being monitored by means of an angular position sensor.

An embodiment of the present invention will now be described by way of example only with reference to the accompanying drawings, in which:-

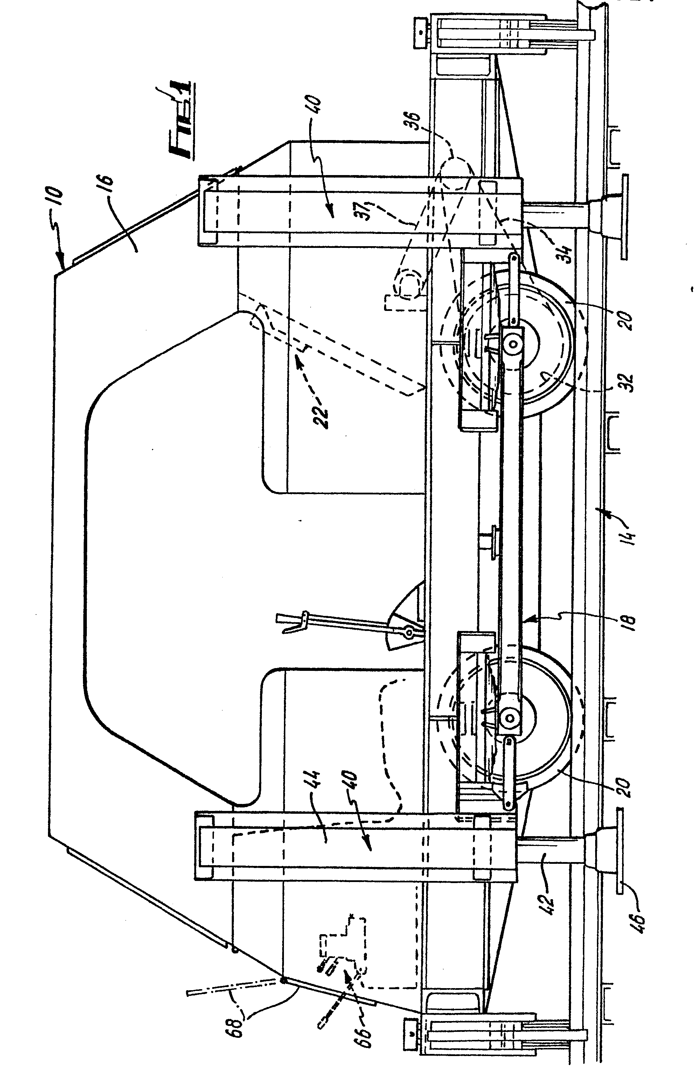

Fig. 1 is a side elevation of an apparatus according to the invention;

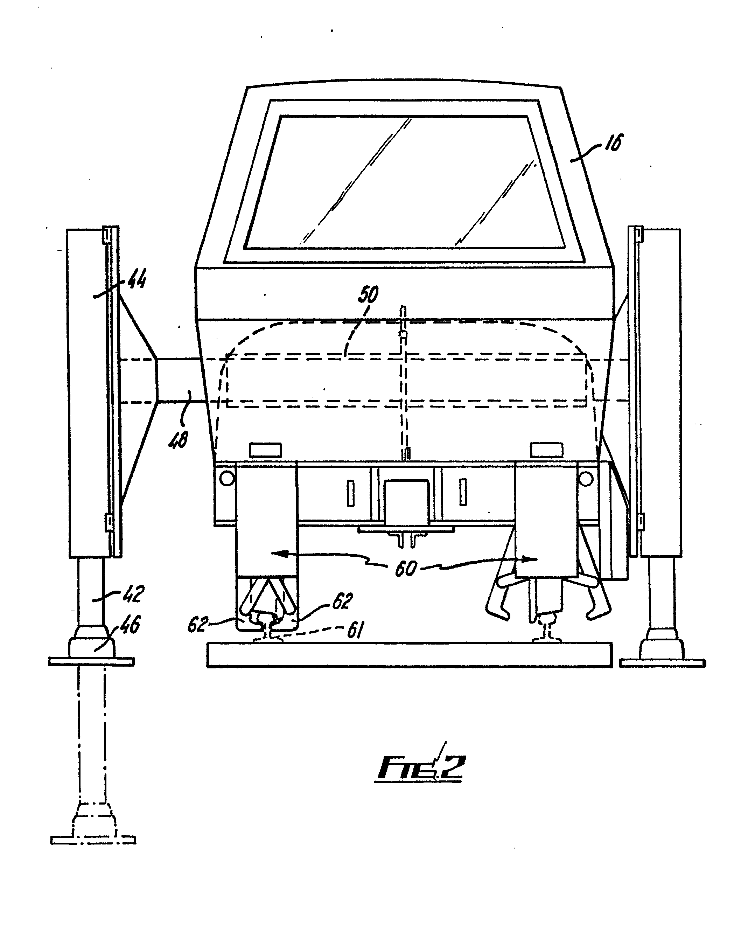

Fig. 2 is an elevation from one end of the apparatus of Fig. 1;

Fig. 3 is a perspective view from said one end;

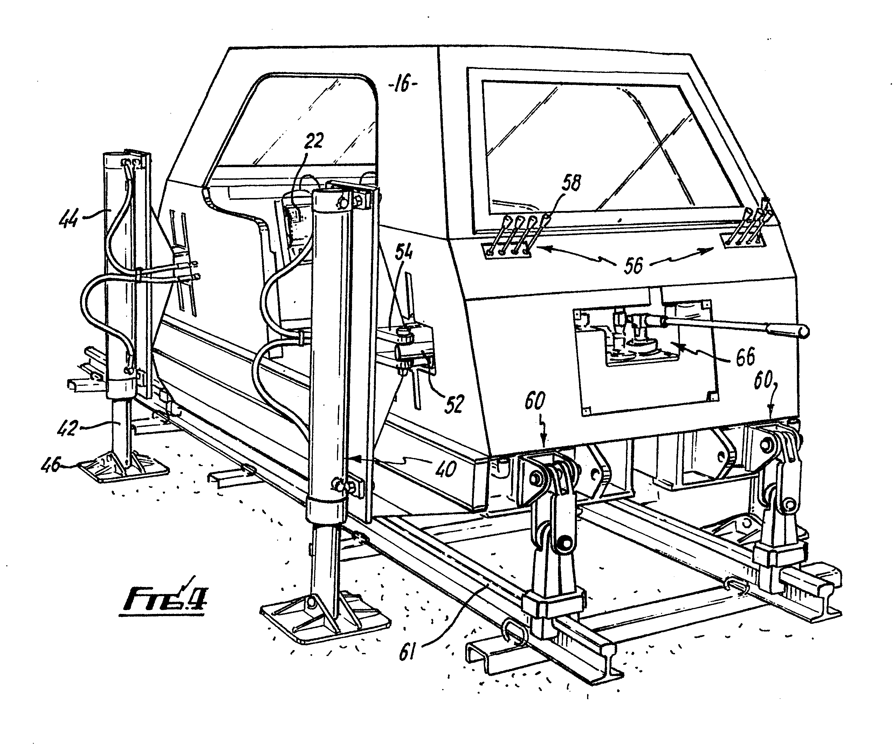

Fig. 4 is a perspective view from the other end;

Fig. 5 is an elevation of part of the apparatus which is not shown in Figs. 1 to 4; and

Fig. 6 is a plan view of the part of Fig. 5.

In underground locations such as mines, the workfaces can extend considerable distances from the pit head location and it is often necessary to transport men or materials or both over such distances. The means of transport may comprise vehicles running on tracks laid in the excavated tunnels and it is important to continually monitor the conditions of the track and of the drive vehicles. Indeed this is required by the safety regulations.

Referring to the drawings, a track vehicle 10 is provided as a self-contained unit containing equipment for carrying out monitoring procedures. The vehicle 10 is arranged to be connected to a drive vehicle for movement along a track 14. The vehicle 10 has a cabin 16 mounted on a bogie 18 having track wheels 20 and a suspension allowing additional wheel movement to meet the requirements of the test facilities hereinafter described.

Within the cabin 16 there is provided a unit housing three chart recorders 22. Normally it is desired that each chart is moved in proportion to the distance travelled by the vehicle 10 on the track 14 and to enable this a mechanical transmission system transmits drive from a wheel 20 of the vehicle 10 to a pulse generator (not shown) in the form of a shaft angle encoder. The pulse generator is formed of a spark resistant material so as to be intrinsically safe when used underground. The pulses emitted by the pulse generator are transmitted to a stepping motor within the chart recorder unit such that, for example, one inch of chart movement corresponds to 30 feet of distance travelled on the track 14.

The mechanical transmission from the wheel 20 to the pulse generator comprises a first sprocket 32 associated with the wheel 20 and a first motion chain 34 driving a sprocket 36 from the sprocket 32. From the sprocket 36, a second motion chain 37 drives a shaft which powers the pulse generator. For the correct ratio the sprockets are designed to produce a predetermined pulse rate from the pulse generator. The mounting of the sprocket 36 compensates for movement of the wheel 20 and thus the sprocket 32.

In a modification, means may be provided for transmitting electrical signals from the wheel 20 to the pulse generator to avoid the requirement for a mechanical transmission.

To present information on the chart of each recorder 22, a pen unit for each chart is operatively connected with a transducer mounted on the vehicle to monitor different conditions of the track 14. The recorders 22 are preferably provided with a switching facility whereby the pulse generator controls the operation of the pen unit in any one of the recorders 22 as an alternative to the chart movement. In this event, an internal battery of the recorder 22 is utilised to drive the chart at a constant speed. With this arrangement, the varying pulse output resulting from a change in the track wheel speed provides a facility for checking, for example, stopping distances of the drive vehicles after braking.

For monitoring the in-line condition of the track 14, between each pair of wheels 20 at a respective side of the vehicle 10 there is provided a transducer operatively connected to a connecting rod extending between the wheels and controlling operation of the pen unit on one of the chart recorders 22. For monitoring lateral tilt, a transducer is operatively connected with an exle of the bogie 18 and controls operation of the pen unit on another of the chart recorders 22.

For monitoring the track gauge, an electronic system utilises a pair of sprung trailing arms (not shown) each carrying a double-flanged wheel, made for example of nylon, the wheel being free to move laterally against light spring pressure. The use of such arms and wheels improves the following of the track rails and enables all mechanical linkages to be mounted below the floor of the cabin.

On each trailing arm there is provided a linear potentiometer which monitors the lateral position of the respective flanged wheel. An interface unit is incorporated to connect to the third of the chart recorders, the latter being fitted with an additional gain setting on the transducer amplifier. A unit is provided to calibrate the track gauge monitor. Chart display of track gauge is analogue and can be set such that the full width of the chart represents a gauge variation of 50mm (2mm chart = 1mm variation).

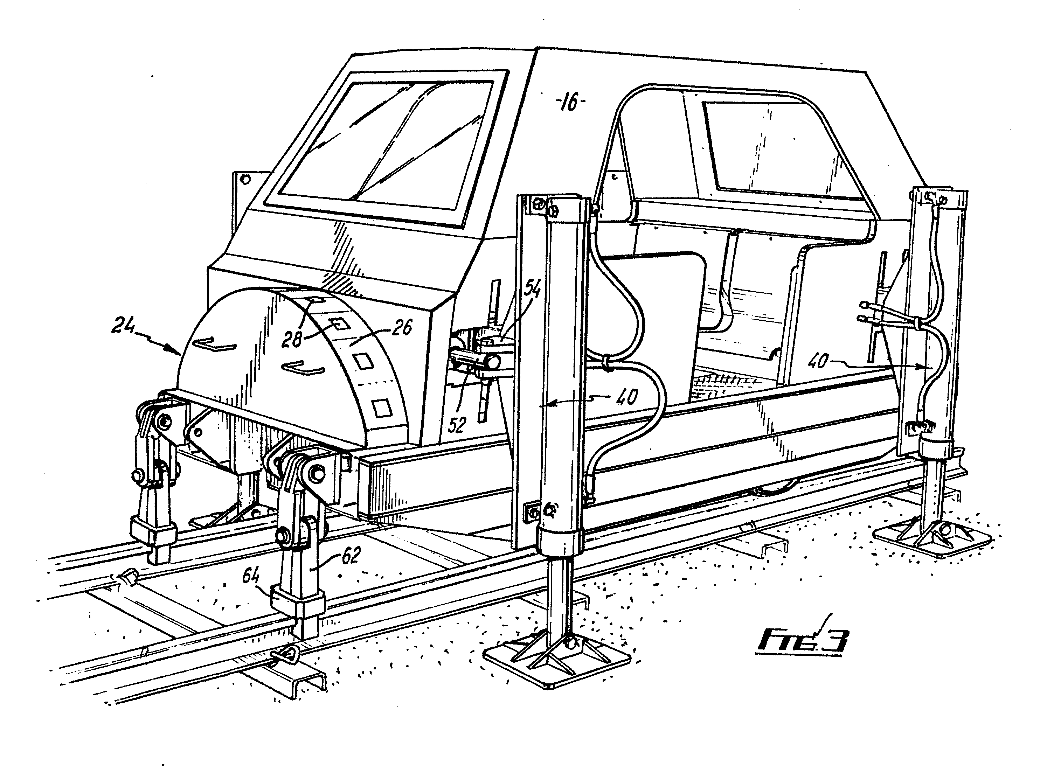

The vehicle is also provided with a roadway clearance arrangement comprising nine sonar transducer heads (not shown) mounted within a housing 24 (Fig. 3) at a front end of the vehicle 10, the housing 24 having an arcuate upper wall 26 in which is defined an aperture 28 aligned with each of the transducer heads. Each of the latter produces ultra-sonic pulses and the operative area of each transducer head is such that overlap between adjacent heads ensures that pulses are transmitted over $180^\circ$ or more laterally of the track roadway. In

this way the distance to the walls or roof of the roadway can be measured acoustically and a control unit for the transducer head is provided which is interfaced to one of the chart recorders 22.

Preferably the display on the chart recorder is set such that a clear roadway is shown as a straight line at a nominal position on the chart. An incursion into the field of sensitivity of the sonar unit causes the pen of the chart recorder to deflect for the distance that an incursion is present. Pulse rate and speed of monitoring of the vehicle determine the minimum difference for which an intrusion must be present to be detected, it being anticipated that at 6 km/hour an intrusion for 15mm will be detected. The system is not capable of measuring the depth of incursion into the roadway but the field of sensitivity around the vehicle is adjustable.

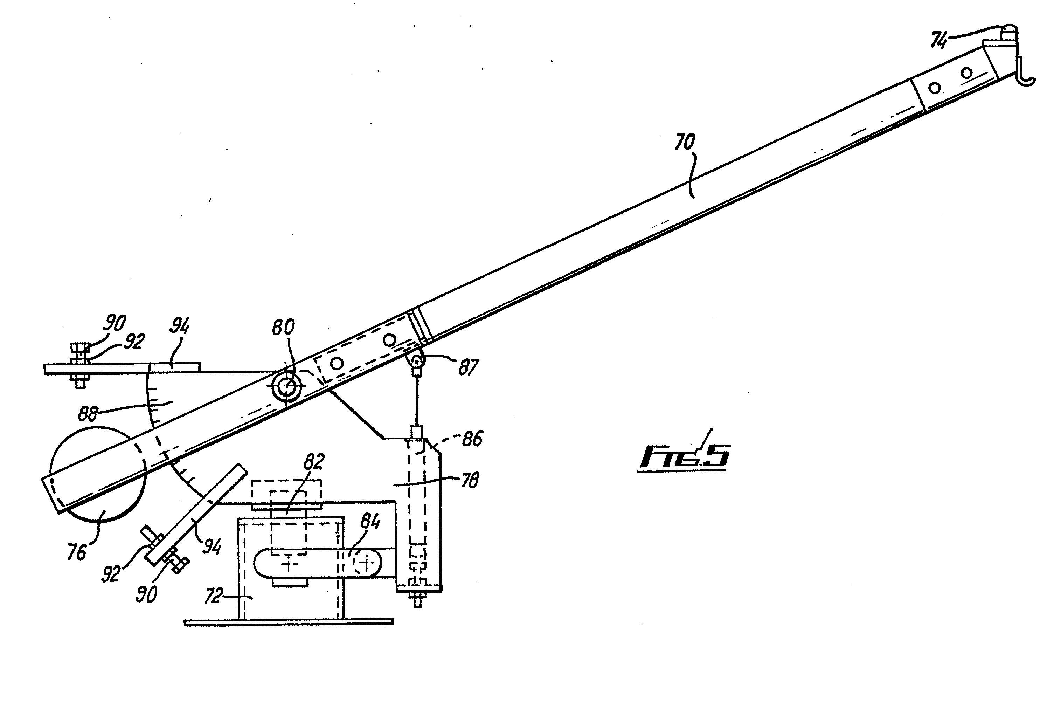

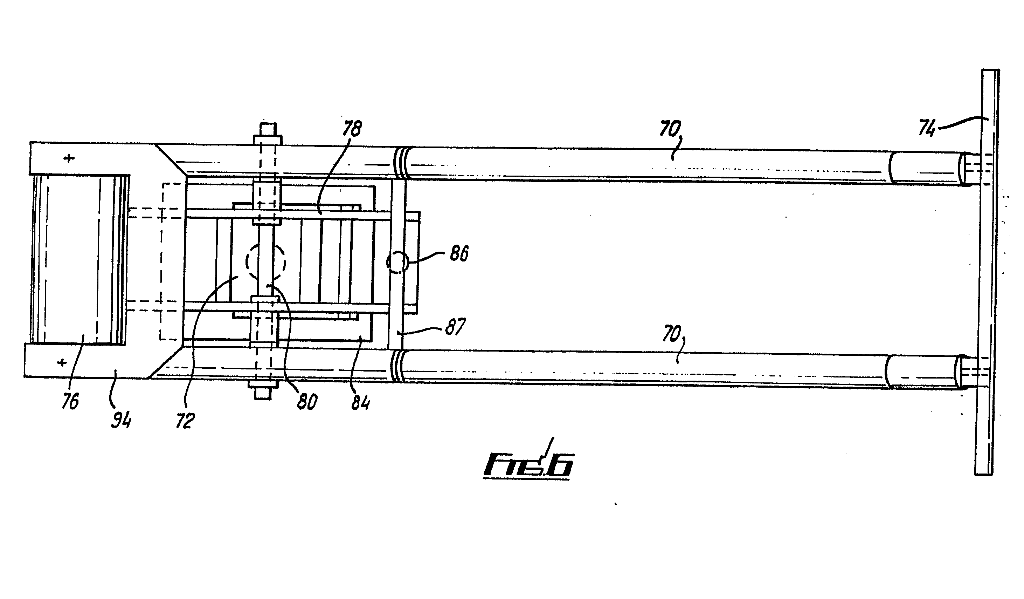

In a further monitoring facility (Figs. 5 and 6) a pair of trolley poles 70 are mounted on the roof of the vehicle 10 by means of a mounting 72 and present at one end a follower 74, preferably of a plastics material, for engagement with a trolley wire running along the track roadway. The trolley poles 70 mount a counterweight 76 at the other ends to lightly bias the follower 74 into contact with the wire and the poles 70 are pivotally mounted on a support 78 about a horizontal pivot 80 so as to be free to move in a vertical plane, the support 78 being mounted by means of a swivel 82 and swivel latch 84 on the mounting 72 to permit lateral or radial movement. Any variations in the height and lateral position of the trolley wire can be monitored, vertical displacement being monitored via a linear potentiometer 86 extending between a connecting bar 87 on the poles 70 and the support 78, and angular displacement by means of an angular position sensor, wired such that identical readings can be made with the pole rotated through 180°. The variations in height and lateral position can be measured in a single run of the vehicle using two of the chart recorders. The counterweight 76 is calibrated by means of a scale 88 on the support 78, over which scale the poles 70 are movable, and vertical travel of the poles 70 is restrained between end positions defined by adjustable stops, each comprising a threaded bolt 90 in a threaded sleeve 92, the latter being at an outer end of a lug 94 extending from the support 78.

It will be appreciated that a chart recorder can be provided for each monitoring facility but it is more desirable to use a smaller number of chart recorders which can be switched to co-operate with selected ones of the monitoring facilities. An intrinsically safe electronic data logger can be used either as a replacement for, or in conjunction with, the existing chart recorders. The data logger improves both the collection of information and the subsequent interpretation of results. Multi-channel capability enables efficient simultaneous recording, in one run, of all roadway parameters that can be monitored. Data is simply and easily recorded, in either cassette or RAM format for easy detailed interpretation. In addition to the data logger the use of a standard chart recorder gives on-the-spot results.

Further, the vehicle is provided with apparatus enabling correction of the position of the track rails when a monitoring facility has detected a deviation. For this purpose, the vehicle 10 has a pair of hydraulic rams 40 positioned laterally outwardly of each side of the cabin 16, each ram 40 being disposed vertically and having a piston 42 extending downwardly from one end of a cylinder 44, the piston having a ground engaging foot 46. Each of the cylinders 44 is connected with a horizontal tube 48 of square configuration telescopically extending into the cabin 16 within an outer tube 50 to prevent movement of the ram 40 from the vertical orientation, the telescopic movement of the tube 48 which controls movement of the respective ram 40 laterally relative to the vehicle 10, being controlled by means of an outboard hydraulic ram 52 having one end connected to a lug 54 mounted on the casing of the ram cylinder 44.

On the rear end of the cabin, to be accessible from outwardly thereof, there are arranged two sets 56 of hand levers, each set having four levers 58 in the hydraulic circuit of the vehicle 10 to control individually the lateral position of each ram 40 relative to the vehicle 10, and the extension of the piston 42 of each ram 40. In the uppermost position the piston 42 of each ram 40 is raised clear of the ground to enable travel of the vehicle along the track while extension of the piston 42 of a respective ram 40 will move the piston 42 into engagement with the ground and thereafter further extension will raise the vehicle 10 relative to the track roadway.

At each end of the vehicle there is provided a clamp 60 for co-operation with a respective one of the rails 61 of the track. Each clamp 60 is pivotally mounted on the vehicle 10 and has a pair of arms 62 mounted on a common pivot with a clamping collar 64 around the arms. In a non-use position, the clamp 60 can be stored with the arms 62 extending upwardly clear of the track roadway, and for use the clamp 60 is pivoted so as to extend downwardly from the vehicle, the collar 64 being moved upwardly on the arms 62 to enable separation of the free outer ends of the latter. The free ends of the arms 62 are then positioned against opposed sides of the respective rail 61 and the collar 64 is moved downwardly to a position preventing separation of the free ends of the arms 62, and therefore locking the clamp 60 to the rail 61.

Accordingly when it is desired to correct the position of a rail 61 the vehicle is stopped and the operator then operates the hydraulic controls to selectively move one or more of the rams 40 laterally outwardly of the vehicle and into engagement with the ground. The rail which is to be corrected is then clamped to the vehicle 10 by means of one or more of the clamps 60, and thereafter further relative lateral or vertical movement of the rams 40 is transmitted into a corresponding movement of the vehicle 10 and thus the rail which is clamped thereto. The position of the rail is obviously changed in accordance with the fault which has previously been monitored.

A hand operated pump 66 is provided for pressurising the hydraulic circuit. An auxiliary coupling is provided for connection of the hydraulic circuit to an external hydraulic supply if accessible, and a cover plate 68 is pivotally arranged on the end of the cabin 16 to cover the hand pump 66 and the auxiliary coupling when the latter are not in use.

The provision of a self-contained vehicle within which all the test facilities can be provided, and within which an operator can be comfortably located for continuous supervision, is extremely advantageous. The operation of the monitoring facilities is possible in whichever direction the vehicle 10 is being towed so that some tests can be carried out on movement in one direction along the mine roadway, and other tests can be carried out when travelling in the reverse direction, without requiring the vehicle to be turned around.

Various other modifications may be made without departing from the invention.

- 12 -                                    0189621

Claims :-

1.   Apparatus for use in association with a track roadway, said apparatus comprising a structure supported on a track wheel arrangement, characterised by clamp means (60) provided on the structure for clamping of the latter to a rail or rails (61) of the track, ground engaging means (42-46) mounted on the structure to be movable between a first position clear of the roadway for movement of the apparatus along the track (61), and a second position in engagement with the roadway, whereby the apparatus, and thus selectively the rail or rails (61), can be raised relative to the ground engaging means (42-46), and means (48-54) for moving the apparatus, and thus selectively the rail or rails, laterally relative to the ground engaging means (42-46), whereby to correct the position of the track (61).

2.   Apparatus according to claim 1, characterised in that the ground engaging means comprises at least one ram (40) positioned laterally outwardly of each side of the structure and disposed vertically, and each ram (40) has a piston (42) extending downwardly from one end of a cylinder (44) and mounting a ground engaging foot (46).

3.   Apparatus according to claim 1 or 2, characterised in that the lateral moving means includes a horizontally disposed ram (52) extending outwardly from each side of the structure and being connected with the respective ground engaging means (42-46), the latter being mounted on a telescopic arrangement (48-50) extending into the structure, telescopic movement being controlled by operation of the respective horizontally disposed ram (52).

4. Apparatus according to any of claims 1 to 3, characterised in that the clamp means comprises a pair of clamps (60) spaced laterally of the structure for co-operation with respective rails (61) of the track, each clamp (60) having a pair of arms (62) mounted on a common pivot with a clamping collar (64) around the arms (62).

5. Apparatus according to claim 4, characterised in that each clamp (60) is pivotally mounted on the structure between a non-use position wherein the arms (62) extend upwardly clear of the track and an in-use position wherein the clamp (60) extends downwardly from the structure.

6. Apparatus for use in association with a track roadway, said apparatus comprising a structure supported on a track wheel arrangement, means operatively connected with the track wheel arrangement for generating a sequence of signals at a rate proportional to the rate of movement along a track, characterised by means mounted on the structure to extend upwardly therefrom and present a component (70) for contact with a trolley wire in the track roadway, the component (70) being movable about a plurality of axes relative to the structure, whereby the relative position of the component (70) can vary in accordance with variations in height and lateral position of the trolley wire in the track roadway, and means (72-84) for converting the relative movement of the component (70) into information which is presented to receiving means therefor.

7.   Apparatus according to claim 6, characterised in that the component comprises an elongate arrangement (70) which provides a follower (74) for engagement with a trolley wire, and the component presenting means comprises a support (78) which pivotally mounts the elongate arrangement (70), the support (78) being pivotally mounted on the structure.

8.   Apparatus according to claim 7, characterised in that the elongate arrangement (70) is pivotally mounted for movement in a vertical plane relative to the support (78), and the vertical displacement is monitored by means of a linear potentiometer (86) extending between the elongate arrangement (70) and the support (78).

9.   Apparatus according to claim 7 or 8, characterised in that a calibration scale (88) is provided on the support (78) whereby to enable calibration of the elongate arrangement (70).

10.   Apparatus according to any of claims 7 to 9, characterised in that the elongate arrangement (70) mounts a counterweight (76) which balances the follower (74) into position and engagement with a trolley wire.

11.   Apparatus according to any of claims 7 to 10, characterised in that the support (78) is pivotal relative to the structure in a horizontal plane in accordance with the angle of displacement of the elongate arrangement (70), the angle of displacement of the elongate arrangement (70) being monitored by means of an angular position sensor, the latter being wired such that identical readings can be made with the elongate arrangement (70)

- 15 -

0189621

positioned in either of two positions $180^{\circ}$ apart.

12. Apparatus according to any of claims 1 to 5, incorporating apparatus according to any of claims 6 to 13, characterised in that there are provided a plurality of units each having one of the information receiving means (22) and the means responsive to the signals, means being provided for presenting information relating to a different parameter of the track roadway to respective receiving means, each of the information receiving means comprising a movable chart, and each of the means responsive to the signals being operatively connected with the respective chart such that the latter moves in proportion to the distance moved along the track.

13. Apparatus according to claim 12, characterised in that switch means is provided whereby at least one of the means responsive to the signal is selectively disconnected from the respective chart and operatively connected with the respective information presentation means.

14. Apparatus according to claim 13, characterised in that further operating means comprises an independent power source which is selectively connectible to the chart to be capable of driving the latter at a constant speed when said one means responsive to the signals is selected to be operatively connected with the information presentation means.

15. Apparatus according to any of the preceding claims, characterised by means (24-28) mounted on the structure for monitoring variations in distance between the track and the wall or walls thereof, the monitoring means (24-28) comprising a plurality of sonar pulse producing components so positioned that the pulses are transmitted over a continuous distance laterally of the structure.

0189621

Fig 1

FIG.2

-16-

24

28

26

54

52

40

40

62

64

FIG.3

36

0189621

FIG.4

-16-

22

44

42

46

54

52

58

56

66

60

60

40

61

4/6

0189621

FIG.5

76

90
92
94
80
88
72
82
84
84
90
92
94
86
78
87
70
74

0189621

0189621

FIG.6

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | US-A- 3 381 626 (FAGAN et al.)<br><br>* Column 1, lines 11-15,19,20,24-26; column 2, lines 66-71; column 3, lines 1-5; column 5, lines 52-57; column 6, lines 3-6,14-24,28-30, 39,40; figures 1,4,5 * | 1-3 | E 21 F 13/02<br>B 60 M 1/28<br>B 61 K 9/08<br>E 01 B 33/02<br>G 01 C 7/06<br>G 01 D 9/38<br>G 01 S 15/88//<br>E 01 B 35/00<br>G 01 P 15/00 |
| Y | | 4 | |
| Y | US-A- 1 458 402 (FORSBERG)<br><br>* Page 1, lines 9,10; page 2, lines 61-69,75-84,90-97; figures 1-3 * | 4 | |
| X | GB-A- 2 083 108 (FRANZ PLASSER BAU-MASCHINEN-INDUSTRIEGESELLSCHAFT)<br><br>* Page 2, lines 74-78,91-95,99-103, 114-117,119-123; page 3, lines 8-13,20-24,32-51; figures 2-4 * | 1-3 | |
| A | GB-A- 820 802 (RAILWAY MAINTENANCE CORP.)<br><br>* Page 1, lines 11,12; page 3, lines 28-61; figures 8-10 * | 5 | |
| A | DE-B- 1 032 558 (ATLAS-WERKE)<br><br>* Column 1, lines 1-9,17-23,28-35, 37-39,46-54; column 2, lines 53, 54; column 3, lines 23-33; figure 1 * | 15 | |
| | ./. | | |

**TECHNICAL FIELDS SEARCHED (Int. Cl.4)**

E 01 B
G 01 C
G 01 S

| Place of search | Date of completion of the search | Examiner |
|---|---|---|
| The Hague | 30-09-1985 | SCHUMAN |

EPO Form 1503 03 82

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## X │ LACK OF UNITY OF INVENTION

The Search Division considers that the present European patent application does not comply with the requirement of unity of invention and relates to several inventions or groups of inventions,

namely:

1) Claims 1-5,15: Apparatus for lifting and slewing track

2) Claims 6-11,15: Rail-borne apparatus for progressive monitoring of position of a trolley wire

3) Claims 12-14: Rail-borne apparatus for recording a plurality of track or track-side variables, adapted to alternatively record a carrier vehicle variable proportional to rate of movement of said vehicle along the track

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims: 1-5,15

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A- 3 950 096 (AESCHLIMAN et al.)<br><br>* Column 1, lines 6-8,51-57; column 3, lines 13,14,19-22,35-37,60-68; column 4, lines 1,2; figure 4 * | 15 | |
| A | FR-A- 2 393 270 (FRANZ PLASSER BAU-MASCHINEN-INDUSTRIEGESELLSCHAFT)<br><br>* Page 1, lines 1-10,34-37; page 2, lines 34-38; page 3, lines 1,34-38; page 4, lines 1-7; page 6, lines 2-7 * | 15 | |
| | | | TECHNICAL FIELDS SEARCHED (Int. Cl.4) |

The present search report has been drawn up for all claims

| Place of search | Date of completion of the search | Examiner |
|---|---|---|
| | | |